# EUROPEAN PATENT SPECIFICATION

(11) **EP 3 855 026 B1**
(45) Date of publication and mention of the grant of the patent: **15.11.2023**
(21) Application number: 20152775.1
(22) Date of filing: 21.01.2020
(51) Int. Cl.: F16B 25/00, F16B 35/06

(54) **SCREW**
SCHRAUBE
VIS

(43) Date of publication of application: 28.07.2021
(73) Proprietor: Hsu, Kuo-Tai, Tainan City 710 (TW); Hsu, Ming-Hao, 710 Tainan City (TW)
(72) Inventor: Hsu, Kuo-Tai, Tainan City 710 (TW); Hsu, Ming-Hao, 710 Tainan City (TW)
(74) Representative: Jannig & Repkow Patentanwälte PartG mbB

(56) References cited:
- DE-A1- 3 344 048
- GB-A- 2 227 540
- US-A- 5 683 217
- US-B2- 8 858 145

## Description

### BACKGROUND OF THE INVENTION

### 1. Field of the Invention

The present invention relates to a screw and, more particularly, to a head structure of a screw.

### 2. Description of the Related Art

A self-tapping screw head structure as disclosed in the US Patent No. US10480562 includes a screw head, a rod connected to the screw head, a cone connected to one end of the rod away from the screw head, and a thread extending from the cone to the rod. A direction of the thread surrounding the cone and the rod determines a tapping direction surrounding the screw head and forming a circumferential path. The screw head includes a top portion, a first neck portion connected to the top portion and having a circumference gradually decreasing towards away from the top portion, a plurality of recesses recessing from a surface of the first neck portion and having recess depths gradually decreasing along the tapping direction, and a second neck portion connected to the first neck portion and having a circumference gradually decreasing towards away from the first neck portion. Each of the plurality of recesses includes a crumb guiding end located at a position with a minimum recess depth, a cutting end away from the crumb guiding end and having a maximum recess depth, a first accommodating groove located between the cutting end and the crumb guiding end and adjacent to the top portion, and a second accommodating groove located between the cutting end and the crumb guiding end, adjacent to the first accommodating groove and away from the top portion. The recess depth of the first accommodating groove is greater than that of the second accommodating groove. During the tapping process of the self-tapping screw head structure, the plurality of recesses are capable of accommodating and discharging wood crumbs and thus eliminating obstruction against the tapping and fastening process. After the tapping and fastening process is completed, wood crumbs are accommodated in the accommodating grooves, increasing the binding force with object and achieving secure fastening.

However, the cutting force of the screw head structure which is being driven into a workpiece is not strong enough and unsatisfactory. Specifically, because the total length of all the cutting ends of the screw head structure extends a partial circumferential surface of the screw head and there is only one cutting end at the screw head structure in the longitudinal axis direction, the cutting ends exert a weak cutting force on the workpiece. Accordingly, a strong torque should be applied on the screw head structure which is being driven into the workpiece, and a speed to drive the screw keeps low. Moreover, remnant wood crumbs probably squeezed outward from the drilled hole remain on the workpiece surface and make the surface uneven after the screw head is driven into the workpiece.

Documents DE 3344048, US 8858145, US 5683217, and GB 2227540 are documents reflecting the relevant background art. DE 3344048 describes a screw including a screw head, wherein a plurality of radial countersunk cutters are formed on a conical clamping surface of the screw head, and several grooves are cut into the circumference of the conical clamping surface and form a chip ejector. These documents do, however, not provide a satisfactory solution of the above mentioned problems.

### BRIEF SUMMARY OF THE INVENTION

It is an objective of the present invention to provide a screw including a head in which a plurality of recesses spaced from one another is designed. Each recess has a function of cutting a workpiece in both longitudinal and radial directions, and the waste generated from cutting can be accommodated in the plurality of recesses, achieving excellent countersinking effect and locking stability.

To achieve this and other objectives, a screw of the present invention, according to claim 1, includes a head and a shank extending from the head and defining a longitudinal axis. A thread is provided on the shank. The head includes a top portion and a first cone portion located between the top portion and the shank and having a peripheral surface. The peripheral surface of the first cone portion is provided with a plurality of recesses spaced from one another in a circumferential direction of the first cone portion. Each of the plurality of recesses includes first and second side edges opposite to each other in the circumferential direction and a top edge linking the first and second side edges and adjacent to the top portion. The first side edge has first recess depths and the second side edge has second recess depths. A maximum second recess depth of the second side edge is less than a maximum first recess depth of the first side edge. The top edge extends in the circumferential direction of the first cone portion and is spaced from the top portion. The top edge is partially arranged between the top portion and the first side edge of an adjacent recess in the direction of the longitudinal axis. An extension angle of each recess in the circumferential direction of the cone portion is greater than 120 degrees .

In an embodiment, the plurality of recesses define a total extension angle in the circumferential direction which surrounds the whole peripheral surface of the first cone portion, and some portions of two adjacent recesses overlap each other along the longitudinal axis.

In an embodiment, the first side edge has a bottom end and a top end linking the top edge, the first side edge extends upward from the bottom end to the top end in a slantwise direction, and an upward slantwise direction of the first side edge is contrary to an upward slantwise direction of the thread.

In an embodiment, the first recess depths of the first side edge at the bottom end and the top end are identical to each other.

In an embodiment, the first recess depths of the first side edge are gradually reduced from the top end to the bottom end.

In an embodiment, the top edge has third recess depths which are gradually reduced from the first side edge to the second side edge.

In an embodiment, the peripheral surface of the first cone portion is provided with at least three recesses spaced in the circumferential direction. In a preferred embodiment, the peripheral surface of the first cone portion is provided with three recesses spaced in the circumferential direction, and an extension angle of each recess in the circumferential direction is between 120 and 170 degrees.

In an embodiment, the peripheral surface of the first cone portion has roughly triangular cross sections.

In an embodiment, the head further includes a second cone portion between the first cone portion and the shank, and the second cone portion has a cone angle different from a cone angle of the first cone portion.

The present invention will become clearer in light of the following detailed description of illustrative embodiments of this invention described in connection with the drawings.

### DESCRIPTION OF THE DRAWINGS

FIG. 1 is a plane view of a screw according to a first embodiment of the present invention.
FIG. 2 is an enlarged perspective view of a head for the screw in FIG. 1.
FIG. 3 is a sectional view taken along line 3-3 of FIG. 1.
FIG. 4 is a sectional view taken along line 4-4 of FIG. 1.
FIG. 5 is a sectional view taken along line 5-5 of FIG. 3.
FIG. 6 is a schematic view illustrating the head of the screw in FIG. 1 driven into a workpiece.
FIG. 7 is a plane view of a screw according to a second embodiment of the present invention.
FIG. 8 is a sectional view similar to FIG. 4, illustrating a peripheral surface of a cone portion of the head of the screw in another embodiment, not according to the invention.

### DETAILED DESCRIPTION OF THE INVENTION

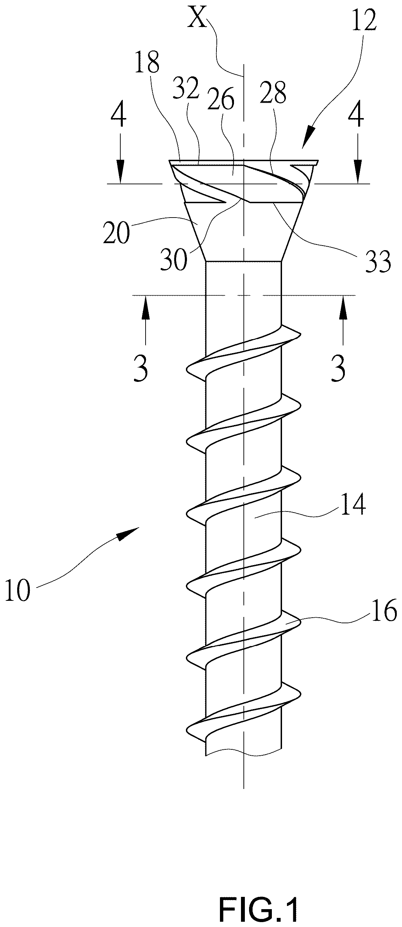

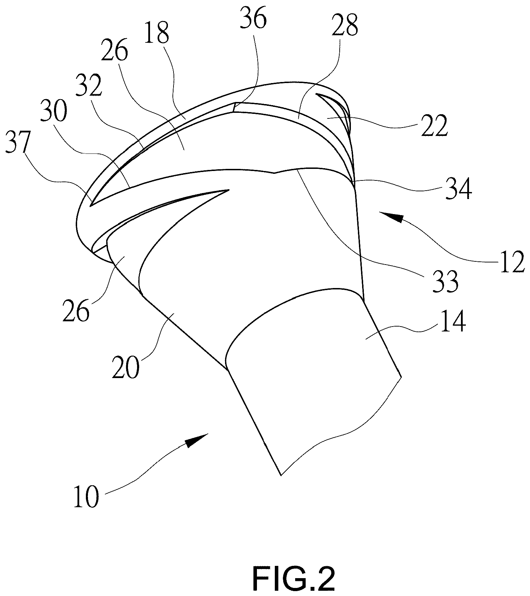

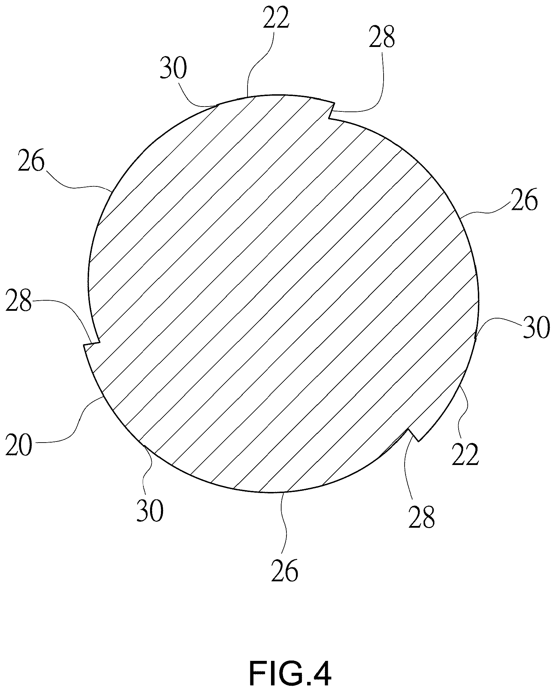

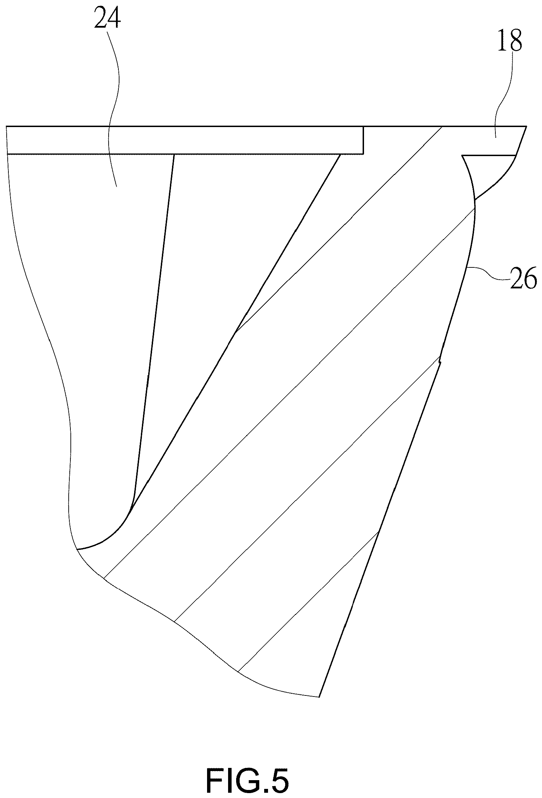

A screw 10 according to a first embodiment of the present invention is shown in FIGS. 1 through 6 of the drawings and includes a head 12 and a shank 14 extending from the head 12 and defining a longitudinal axis X. In this embodiment, the shank 14 has a circular cross section and is provided with at least one thread 16 which is a right-hand thread slantwise upward extending from left to right. The shank 14 is provided with a screw-in portion (not shown in figures) at the tail end. The head 12 includes a top portion 18 and a cone portion 20 between the top portion 18 and the shank 14. In this embodiment, the cone portion 20 has a peripheral surface 22 with a single cone angle. In a feasible embodiment, the head 12 includes two cone portions with two distinct cone angles. The peripheral surface 22 has an outer diameter tapering from the top portion 18 to the shank 14, and the top portion 18 has an outer diameter greater than the shank 14. A socket 24 is disposed in an upper surface of the head 22 for a screwdriver (not shown) to insert into.

The screw 10 of the present invention is characteristic of the peripheral surface 22 of the cone portion 20 provided with a plurality of recesses 26 which are spaced from one another in a circumferential direction of the cone portion 20. In this embodiment, the peripheral surface 22 features a circular cross section, and the cone portion 20 is provided with three recesses 26 arranged circumferentially and spaced from one another based on a certain angle. Each recess 26 displays a polygon in shape (for example, quadrilateral or triangle). In this embodiment, each recess 26 designed as a quadrilateral includes first and second side edges 28, 30 opposite to each other in the circumferential direction, a top edge 32 linking the first and second side edges 28, 30 and adjacent to the top portion 18, and a bottom edge 33 linking the first and second side edges 28, 30 and staying away from the top portion 18. The first side edge 28 has a bottom end 34 and a top end 36 linking the top edge 32 and forming a first turning angle. The first side edge 28 has first recess depths and forms a lateral cutting edge for cutting in the radial direction. The second side edge 30 has second recess depths and forms a guiding edge. A maximum second recess depth is less than a maximum first recess depth of the first side edge 28. The top edge 32 with third recess depths forms a top cutting edge for cutting in the longitudinal direction. In this embodiment, the third recess depths of the top edge 32 are gradually reduced from the first side edge 28 to the second side edge 30. The recess depths of the first side edge 28 at the bottom end 34 and the top end 36 may be different from each other, for example, the recess depths of the first side edge 28 tapering from the top end 36 to the bottom end 34. Alternatively, the recess depths of the first side edge 28 at the bottom end 34 and the top end 36 can be identical to each other. Moreover, the first side edge 28 extends upward from the bottom end 34 to the top end 36 in either a slantwise direction or a curve, and the upward slantwise direction of the first side edge 28 is contrary to an upward slantwise direction of the thread 16. The length of the first side edge 28 extending along the longitudinal axis X is changeable based on material of a workpiece. In this embodiment, the length is about 50% of the length of the cone portion 20 along the longitudinal axis X, and the top end 36 of the first side edge 28 is adjacent to the top portion 18. In a feasible embodiment, each recess 26 is designed as a triangle, wherein the bottom ends of the first and second side edges 28 and 30 are merged into one point where there is no existence of the bottom edge 33.

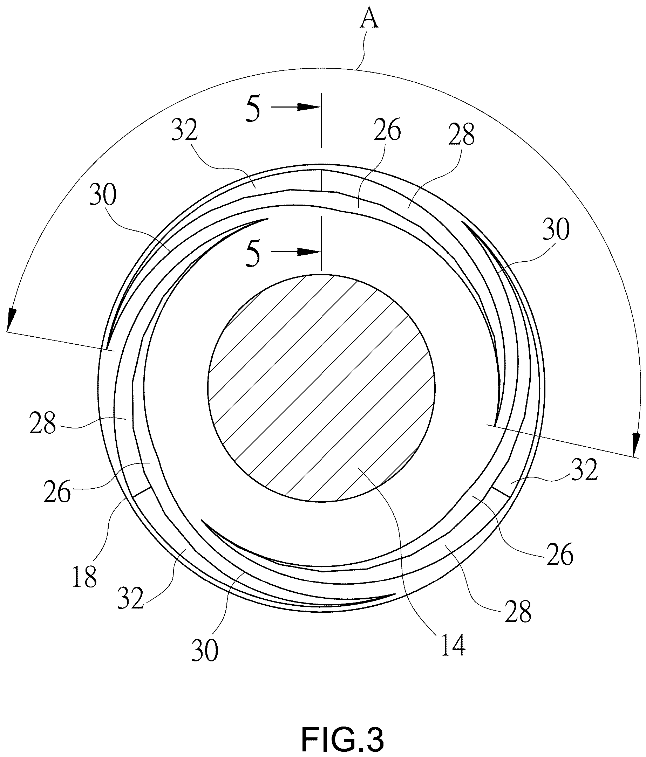

The top edge 32 extends in the circumferential direction of the cone portion 20 and has a second turning angle 37 connected to the second side edge 30. The second turning angle 37 is located between the top portion 18 and the first side edge 28 of an adjacent recess 26 along the longitudinal axis X. That is, a segment of the top edge 32 connecting to the second side edge 30 of each recess 26 is situated above the first side edge 28 of an adjacent recess 26 in the direction of the longitudinal axis X. Accordingly, the cone portion 20 partially includes two cutting edges (a lateral cutting edge formed by the first side edge 28 of a recess 26 and a top cutting edge formed by the top edge 32 of an adjacent recess 26) along the longitudinal axis X. In the embodiment according to the invention, the extension angle A of each recess 26 in the circumferential direction of the cone portion 20 is greater than 120 degrees (see FIG. 3) and between 120 and 170 degrees preferably, such that the plurality of recesses 26 form all cutting edges extending and encircling the whole peripheral surface 22 of the cone portion 20, and some portions of two adjacent recesses 26 overlap each other along the longitudinal axis X.

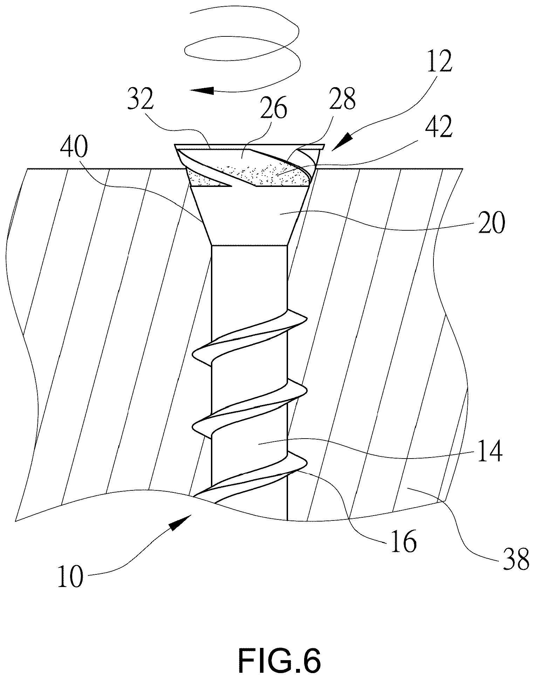

In practice, as shown in FIG. 6, the screw 10 is inserted into a workpiece 38 such as a plank based on the screw-in portion (not shown in FIG. 6) of the shank 14 as an anchor point and rotated by a tool on the head 12, and the shank 14 is driven into the workpiece 38 in which a hole 40 has been drilled by the thread 16. Next, with a hole wall of the hole 40 cut in the radial direction by the first side edge 28 of one of the recesses 26 in the peripheral surface 22, the hole 40 in the workpiece 38 in which the head 12 is screwed is enlarged. Subsequently, the upper cutting edge which is formed by the top edge 32 of an adjacent recess 26 above the first side edge 28 will longitudinally cut the workpiece 38 in the axial direction. Arranged along the longitudinal axis X and adjacent to each other, one first side edge 28 and one top edge 32 of two adjacent recesses 26 are effective in repeated cutting in more than one direction. Moreover, in the plurality of recesses 26, the first side edges 28 and the top edges 32, all of which extend and encircle the whole peripheral surface 22 of the head 12, optimize a countersunk head for stable fastening. Additionally, remnant chips generated in the enlarged hole 40 are accumulated in recesses 26, and the remnant chips cut by the first side edge 28 of one recess 26 are squeezed downward by the top edge 32 of an adjacent recess 26 above the first side edge 28 and not exposed to ambient environment of the drilled hole for good flatness of the workpiece.

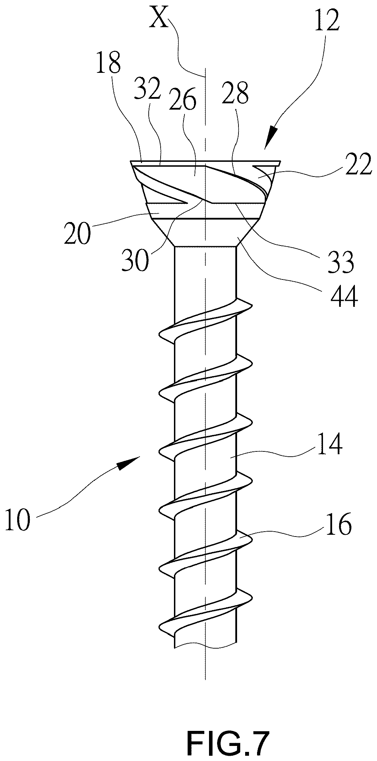

FIG. 7 shows a screw 10 according to a second embodiment of the present invention modified from the first embodiment. In this embodiment, the head 12 further includes another cone portion 44 between the cone portion 20 and the shank 14. The cone portion 44 features a cone angle different from a cone angle of the cone portion 20 for better recess depths formed by the first side edge 28 and the top edge 32 on the cone portion 20. In a feasible embodiment, the plurality of recesses 26 can also be deployed on the cone portion 44.

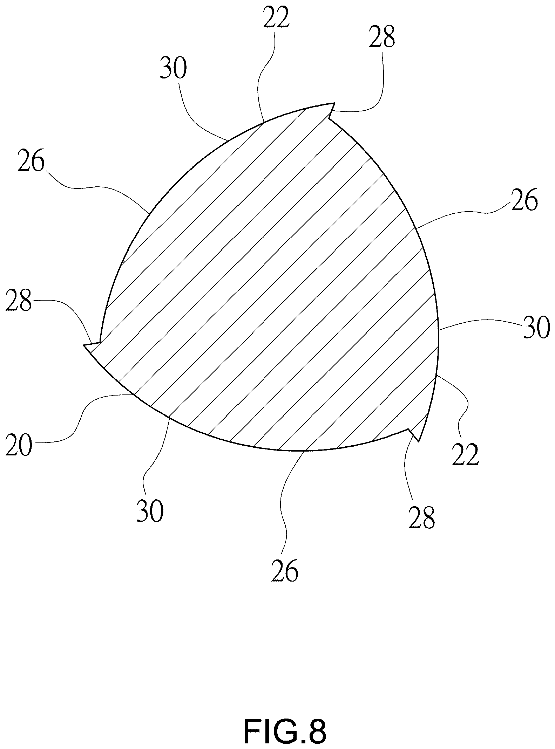

FIG. 8 illustrates the peripheral surface 22 of the cone portion 20 of an embodiment not according to the invention, which is provided with three spaced recesses 26 circumferentially and features roughly triangular cross sections so as to improve the hole expansion and chip stirring function of the cone portion 20. In FIG. 8, the second side edge 30 is characteristic of no development of recess depths and overlaps the peripheral surface 22. In a feasible embodiment, not according to the invention, the peripheral surface 22 is provided with more than three recesses 26 spaced from one another in the circumferential direction of the cone portion 20 and the characteristic of the cross section of the peripheral surface 22 is with a shape matching the number of recesses, for example, an approximately quadrilateral cross section matching four recesses or an approximately pentagon cross section matching five recesses. In the case of four recesses 26 arranged on the peripheral surface 22 of the cone portion 20, each recess 26 is characteristic of an extension angle greater than 90 degrees (for example, between 90 and 120 degrees) in the circumferential direction of the cone portion 20 such that a partial top edge 32 of each recess 26 along the longitudinal axis X is situated between the top portion 18 and the first side edge 28 of an adjacent recess 26.

The scope of the invention is to be indicated by the appended claims, rather than by the foregoing description, and all changes which come within the meaning of the claims are intended to be embraced therein.

## Claims

1. A screw (10) comprising a head (12) and a shank (14) extending from the head (12) and defining a longitudinal axis (X), with a thread (16) provided on the shank (14), with the head (12) including a top portion (18) and a first cone portion (20) located between the top portion (18) and the shank (14) and having a peripheral surface (22), wherein the peripheral surface (22) of the first cone portion (20) is provided with a plurality of recesses (26) spaced from one another in a circumferential direction of the first cone portion (20), with each of the plurality of recesses (26) including first and second side edges (28, 30) opposite to each other in the circumferential direction and a top edge (32) linking the first and second side edges (28, 30) and adjacent to the top portion (18), with the first side edge (28) having first recess depths and the second side edge (30) having second recess depths, with a maximum second recess depth being less than a maximum first recess depth of the first side edge (28), wherein the top edge (32) extends in the circumferential direction of the first cone portion (20) and is spaced from the top portion (18),
**characterized in that** the top edge (32) is partially arranged between the top portion (18) and the first side edge (28) of an adjacent recess (26) in the direction of the longitudinal axis (X), and an extension angle (A) of each recess (26) in the circumferential direction of the cone portion (20) is greater than 120 degrees.

2. The screw (10) according to claim 1, wherein the plurality of recesses (26) define a total extension angle in the circumferential direction which surrounds the whole peripheral surface (22) of the first cone portion (20), and some portions of two adjacent recesses (26) overlap each other along the longitudinal axis (X).

3. The screw (10) according to claim 1, wherein the first side edge (28) has a bottom end (34) and a top end (36) linking the top edge (32), with the first side edge (28) extending upward from the bottom end (34) to the top end (36) in a slantwise direction, with an upward slantwise direction of the first side edge (28) being contrary to an upward slantwise direction of the thread (16).

4. The screw (10) according to claim 3, wherein the first recess depths of the first side edge (28) at the bottom end (34) and the top end (36) are identical to each other.

5. The screw (10) according to claim 3, wherein the first recess depths of the first side edge (28) are gradually reduced from the top end (36) to the bottom end (34).

6. The screw (10) according to claim 1, wherein the top edge (32) has third recess depths which are gradually reduced from the first side edge (28) to the second side edge (30).

7. The screw (10) according to claim 1, wherein the peripheral surface (22) of the first cone portion (20) is provided with at least three recesses (26) spaced in the circumferential direction.

8. The screw (10) according to claim 7, wherein the peripheral surface (22) of the first cone portion (20) is provided with three recesses (26) spaced in the circumferential direction, and an extension angle (A) of each recess (26) in the circumferential direction is between 120 and 170 degrees.

9. The screw (10) according to claim 8 , wherein the peripheral surface (22) of the first cone portion (20) has roughly triangular cross sections.

10. The screw (10) according to claim 1, wherein the head (12) further includes a second cone portion (44) between the first cone portion (20) and the shank (14), and the second cone portion (44) has a cone angle different from a cone angle of the first cone portion (20).

11. The screw (10) according to claim 1, wherein the peripheral surface (22) of the first cone portion (20) is provided with three recesses (26) spaced in the circumferential direction, and the peripheral surface (22) of the first cone portion (20) has roughly triangular cross sections.

12. The screw (10) according to claim 1, wherein the peripheral surface (22) of the first cone portion (20) is provided with four recesses (26) spaced in the circumferential direction, and the peripheral surface (22) of the first cone portion (20) has roughly quadrilateral cross sections.

## Patentansprüche

1. Schraube (10), umfassend einen Kopf (12) und einen sich vom Kopf (12) erstreckenden und eine Längsachse (X) definierenden Schaft (14), wobei ein Gewinde (16) an dem Schaft (14) vorgesehen ist, wobei der Kopf (12) einen oberen Abschnitt (18) und einen zwischen dem oberen Abschnitt (18) und dem Schaft (14) angeordneten und eine Umfangsfläche (22) aufweisenden ersten Kegelabschnitt (20) umfasst, wobei die Umfangsfläche (22) des ersten Kegelabschnitts (20) mit mehreren Aussparungen (26) versehen ist, die in Umfangsrichtung des ersten Kegelabschnitts (20) voneinander beabstandet sind, wobei jede der mehreren Aussparungen (26) eine in Umfangsrichtung einander entgegengesetzte erste und zweite Seitenkante (28, 30) und eine die erste und zweite Seitenkante (28, 30) verbindende und an den oberen Abschnitt (18) angrenzende Oberkante (32) umfasst, wobei die erste Seitenkante (28) erste Aussparungstiefen aufweist und die zweite Seitenkante (30) zweite Aussparungstiefen aufweist, wobei eine maximale zweite Aussparungstiefe geringer ist als eine maximale erste Aussparungstiefe der ersten Seitenkante (28), wobei sich die Oberkante (32) in Umfangsrichtung des ersten Kegelabschnitts (20) erstreckt und vom oberen Abschnitt (18) beabstandet ist,
**dadurch gekennzeichnet, dass** die Oberkante (32) teilweise zwischen dem oberen Abschnitt (18) und der ersten Seitenkante (28) einer angrenzenden Aussparung (26) in Richtung der Längsachse (X) angeordnet ist und ein Ausdehnungswinkel (A) jeder Aussparung (26) in Umfangsrichtung des Kegelabschnitts (20) größer ist als 120 Grad.

2. Schraube (10) nach Anspruch 1, wobei die mehreren Aussparungen (26) einen Gesamtausdehnungswinkel in Umfangsrichtung definieren, der die gesamte Umfangsfläche (22) des ersten Kegelabschnitts (20) umgibt, und einige Abschnitte zweier angrenzender Aussparungen (26) einander entlang der Längsachse (X) überlagern.

3. Schraube (10) nach Anspruch 1, wobei die erste Seitenkante (28) ein unteres Ende (34) und ein oberes Ende (36) aufweist, die die Oberkante (32) verbindet, wobei sich die erste Seitenkante (28) vom unteren Ende (34) zum oberen Ende (36) schräg nach oben erstreckt, wobei die schräge Aufwärtsrichtung der ersten Seitenkante (28) der schrägen Aufwärtsrichtung des Gewindes (16) entgegengesetzt ist.

4. Schraube (10) nach Anspruch 3, wobei die ersten Aussparungstiefen der ersten Seitenkante (28) am unteren Ende (34) und am oberen Ende (36) identisch sind.

5. Schraube (10) nach Anspruch 3, wobei die ersten Aussparungstiefen der ersten Seitenkante (28) vom oberen Ende (36) zum unteren Ende (34) allmählich abnehmen.

6. Schraube (10) nach Anspruch 1, wobei die Oberkante (32) dritte Aussparungstiefen aufweist, die von der ersten Seitenkante (28) zur zweiten Seitenkante (30) allmählich abnehmen.

7. Schraube (10) nach Anspruch 1, wobei die Umfangsfläche (22) des ersten Kegelabschnitts (20) mit mindestens drei in Umfangsrichtung beabstandeten Aussparungen (26) versehen ist.

8. Schraube (10) nach Anspruch 7, wobei die Umfangsfläche (22) des ersten Kegelabschnitts (20) mit drei in Umfangsrichtung beabstandeten Aussparungen (26) versehen ist und der Ausdehnungswinkel (A) jeder Aussparung (26) in Umfangsrichtung zwischen 120 und 170 Grad beträgt.

9. Schraube (10) nach Anspruch 8, wobei die Umfangsfläche (22) des ersten Kegelabschnitts (20) in etwa dreieckige Querschnitte aufweist.

10. Schraube (10) nach Anspruch 1, wobei der Kopf (12) ferner einen zweiten Kegelabschnitt (44) zwischen dem ersten Kegelabschnitt (20) und dem Schaft (14) umfasst und der zweite Kegelabschnitt (44) einen Kegelwinkel aufweist, der sich vom Kegelwinkel des ersten Kegelabschnitts (20) unterscheidet.

11. Schraube (10) nach Anspruch 1, wobei die Umfangsfläche (22) des ersten Kegelabschnitts (20) mit drei in Umfangsrichtung beabstandeten Aussparungen (26) versehen ist und die Umfangsfläche (22) des ersten Kegelabschnitts (20) in etwa dreieckige Querschnitte aufweist.

12. Schraube (10) nach Anspruch 1, wobei die Umfangsfläche (22) des ersten Kegelabschnitts (20) mit vier in Umfangsrichtung beabstandeten Aussparungen (26) versehen ist und die Umfangsfläche (22) des ersten Kegelabschnitts (20) in etwa vierseitige Querschnitte aufweist.

## Revendications

1. Vis (10) comprenant une tête (12) et une tige (14) s'étendant à partir de la tête (12) et définissant un axe longitudinal (X), un filetage (16) étant situé sur la tige (14), la tête (12) comprenant une partie supérieure (18) et une première partie conique (20) située entre la partie supérieure (18) et la tige (14) et ayant une surface périphérique (22), la surface périphérique (22) de la première partie conique (20) étant pourvue d'une pluralité d'évidements (26) espacés les uns des autres dans une direction circonférentielle de la première partie conique (20), chacun de la pluralité d'évidements (26) comprenant des premier et second bords latéraux (28, 30) opposés l'un à l'autre dans la direction circonférentielle et un bord supérieur (32) reliant les premier et second bords latéraux (28, 30) et adjacent à la partie supérieure (18), le premier bord latéral (28) ayant des premières profondeurs d'évidement et le second bord latéral (30) ayant des deuxièmes profondeurs d'évidement, une deuxième profondeur d'évidement maximale étant inférieure à une première profondeur d'évidement maximale du premier bord latéral (28), le bord supérieur (32) s'étendant dans la direction circonférentielle de la première partie conique (20) et étant espacé de la partie supérieure (18),
**caractérisée en ce que** le bord supérieur (32) est partiellement disposé entre la partie supérieure (18) et le premier bord latéral (28) d'un évidement (26) adjacent dans la direction de l'axe longitudinal (X), et **en ce qu'**un angle d'extension (A) de chaque évidement (26) dans la direction circonférentielle de la partie conique (20) est supérieur à 120 degrés.

2. Vis (10) selon la revendication 1, la pluralité d'évidements (26) définissant un angle d'extension total dans la direction circonférentielle qui entoure toute la surface périphérique (22) de la première partie conique (20), et certaines parties de deux évidements (26) adjacents se chevauchant l'une l'autre le long de l'axe longitudinal (X).

3. Vis (10) selon la revendication 1, le premier bord latéral (28) ayant une extrémité inférieure (34) et une extrémité supérieure (36) reliant le bord supérieur (32), le premier bord latéral (28) s'étendant vers le haut de l'extrémité inférieure (34) à l'extrémité supérieure (36) dans une direction oblique, une direction oblique vers le haut du premier bord latéral (28) étant contraire à une direction oblique vers le haut du filetage (16).

4. Vis (10) selon la revendication 3, les premières profondeurs d'évidement du premier bord latéral (28) au niveau de l'extrémité inférieure (34) et de l'extrémité supérieure (36) étant identiques les unes aux autres.

5. Vis (10) selon la revendication 3, les premières profondeurs d'évidement du premier bord latéral (28) étant progressivement réduites de l'extrémité supérieure (36) à l'extrémité inférieure (34).

6. Vis (10) selon la revendication 1, le bord supérieur (32) ayant des troisièmes profondeurs d'évidement qui sont progressivement réduites du premier bord latéral (28) vers le second bord latéral (30).

7. Vis (10) selon la revendication 1, la surface périphérique (22) de la première partie conique (20) étant pourvue d'au moins trois évidements (26) espacés dans la direction circonférentielle.

8. Vis (10) selon la revendication 7, la surface périphérique (22) de la première partie conique (20) étant pourvue de trois évidements (26) espacés dans la direction circonférentielle, et un angle d'extension (A) de chaque évidement (26) dans la direction circonférentielle étant compris entre 120 et 170 degrés.

9. Vis (10) selon la revendication 8, la surface périphérique (22) de la première partie conique (20) ayant des sections transversales grossièrement triangulaires.

10. Vis (10) selon la revendication 1, la tête (12) comprenant en outre une seconde partie conique (44) entre la première partie conique (20) et la tige (14), et la seconde partie conique (44) ayant un angle conique différent d'un angle conique de la première partie conique (20).

11. Vis (10) selon la revendication 1, la surface périphérique (22) de la première partie conique (20) étant pourvue de trois évidements (26) espacés dans la direction circonférentielle, et la surface périphérique (22) de la première partie conique (20) ayant des sections transversales grossièrement triangulaires.

12. Vis (10) selon la revendication 1, la surface périphérique (22) de la première partie conique (20) étant pourvue de quatre évidements (26) espacés dans la direction circonférentielle, et la surface périphérique (22) de la première partie conique (20) ayant des sections transversales grossièrement quadrilatérales.
